# EUROPÄISCHE PATENTSCHRIFT

(11) **EP 3 159 952 B1**
(45) Veröffentlichungstag und Bekanntmachung des Hinweises auf die Patenterteilung: **11.12.2019**
(21) Anmeldenummer: 15190438.0
(22) Anmeldetag: 19.10.2015
(51) Int. Cl.: H01M 2/12, H01M 2/26, H01M 2/30, H01M 2/34, B60L 3/00, B60L 3/04, B60L 50/64, H01M 10/0525

(54) **SICHERHEITSVORRICHTUNG FÜR BATTERIESYSTEME**
SAFETY DEVICE FOR BATTERY SYSTEMS
DISPOSITIF DE SECURITE POUR SYSTEMES DE BATTERIE

(43) Veröffentlichungstag der Anmeldung: 26.04.2017
(73) Patentinhaber: ROBERT BOSCH GMBH, 70442 Stuttgart (DE); GS Yuasa International Ltd., Kisshoin, Minami-ku, Kyoto-shi, Kyoto 601-8520 (JP)
(72) Erfinder: Reinshagen, Holger, 96052 Bamberg (DE); Berg, Anselm, 71640 Ludwigsburg (DE)
(74) Vertreter: Isarpatent

(56) Entgegenhaltungen:
- EP-A1- 2 884 563
- JP-A- 2001 126 694
- US-A1- 2010 316 894

## Beschreibung

### Stand der Technik

Aus dem Stand der Technik sind Vorrichtungen zur Erhöhung der Sicherheit von Batteriesystemen bekannt, wobei es sich bei diesen Vorrichtungen beispielsweise um Entgasungsvorrichtungen handeln kann. Bei den Entgasungsvorrichtungen kann es sich um Ventile oder Sollbruchstellen handeln, die an einem Bereich der Batteriesysteme angeordnet sind und zum Öffnen unter Druckeinwirkung geeignet sind.

Dabei können zum Beispiel Sollbruchstellen insbesondere in Form von Perforationen auf einer Oberfläche des Batteriesystems ausgebildet sein. So zeigt beispielsweise die DE 10 2010 001 533 A1 eine Entgasungsvorrichtung einer Batteriezelle, wobei es sich um eine Entgasungsvorrichtung in Form einer Mehrzahl von Materialschwächungen handelt, wobei die Materialschwächungen in einer Wand eines Gehäuses der Batteriezelle ausgebildet sind. EP 2 884 563 A1 beschreibt ein Batteriesystem mit mindestens einem Terminal, geeignet zur elektrischen Kontaktierung des Batteriesystems mit einem anderen System, wobei der mindestens eine Terminal auf einem Bereich eines Gehäuses des Batteriesystems angeordnet ist, wobei der Bereich des Gehäuses, auf dem der mindestens eine Terminal angeordnet ist, zum Ablösen von einem anderen Bereich des Gehäuses unter Druckeinwirkung geeignet ist. Weitere aus dem Stand der Technik bekannte Batteriesysteme sind in den Druckschriften US 2010/316894 A1 und JP 2001 126694 A beschrieben.

### Offenbarung der Erfindung

Die Erfindung wird durch den Gegenstand der Ansprüche definiert. Offenbart wird ein Batteriesystem, insbesondere ein Lithiumionen-Batteriesystem, mit mindestens einem Terminal, geeignet zur elektrischen Kontaktierung des Batteriesystems mit einem anderen System, wobei der mindestens eine Terminal auf einem Bereich eines Gehäuses des Batteriesystems angeordnet ist. Bei dem anderen System kann es sich beispielsweise um ein anderes Batteriesystem oder um einen Verbraucher handeln. Der Verbraucher wird über den mindestens einen Terminal mit elektrischer Energie aus dem Batteriesystem versorgt.

Der Kern der Offenbarung besteht darin, dass der Bereich des Gehäuses, auf dem der mindestens eine Terminal angeordnet ist, zum Ablösen von einem anderen Bereich des Gehäuses unter Druckeinwirkung geeignet ist.

Durch den Umstand, dass der Bereich des Gehäuses, auf dem der mindestens eine Terminal angeordnet ist, zum Ablösen von einem anderen Bereich des Gehäuses unter Druckeinwirkung geeignet ist, kann der mindestens eine Terminal von einem elektrischen Energiespeicher innerhalb des Batteriesystems bei Anwachsen eines Druckes und/oder bei Entstehung eines Überdruckes getrennt werden.

Hintergrund der Offenbarung ist, dass im Falle eines entstehenden Überdrucks innerhalb eines Batteriesystems die elektrische Kontaktierung zwischen dem Batteriesystem und einem anderen System getrennt werden soll. Durch diese Trennung der elektrischen Kontaktierung werden unerwünschte elektrische Effekte, wie beispielsweise externe Kurzschlüsse oder Kriechströme, verhindert. Durch die Verhinderung unerwünschter elektrischer Effekte wird die Sicherheit im Umgang mit einem schadhaften Batteriesystem erhöht. Schadhaft kann das Batteriesystem insbesondere dann sein, wenn es zu einer Entstehung von Gasen im Inneren des Batteriesystems gekommen ist. Hintergrund der Erfindung ist somit ferner die Erhöhung der Sicherheit von Lebewesen oder Gegenständen, die sich im Umfeld des schadhaften Batteriesystems befinden.

Offenbart hinaus die Verwendung eines Batteriesystems in einem Fahrzeug, insbesondere in einem Kraftfahrzeug.

Bei einem Batteriesystem handelt es sich vorzugsweise um einen wiederaufladbaren elektrochemischen Energiespeicher. Das Batteriesystem enthält mindestens eine Batteriezelle und kann gegebenenfalls Vorrichtungen zur Steuerung der Batteriezelle enthalten. Die Batteriezelle kann auch mit anderen Batteriezellen innerhalb oder außerhalb des Batteriesystems elektrisch verbindbar ausgestaltet sein.

Mindestens ein Terminal ist zur elektrischen Kontaktierung mit einem Stromableiter geeignet. Dabei besteht zwischen dem mindestens einem Terminal und dem

Stromableiter kein elektrischer Kontakt, wenn der Bereich des Gehäuses, auf dem der mindestens eine Terminal angeordnet ist, abgelöst ist.

Entsprechend einer nächsten vorzugsweisen Ausgestaltungsform der Offenbarung ist der Bereich des Gehäuses, auf dem der mindestens eine Terminal angeordnet ist, mit dem anderen Bereich des Gehäuses durch eine Sollbruchstelle und insbesondere durch einen perforierten oder geprägten Bereich des Gehäuses verbunden. Durch den Umstand, dass der Bereich des Gehäuses, auf dem der mindestens eine Terminal angeordnet ist, mit dem anderen Bereich des Gehäuses durch eine Sollbruchstelle und insbesondere durch einen perforierten oder geprägten Bereich des Gehäuses verbunden ist, kann die Ablösung des Bereichs des Gehäuses, auf dem der mindestens eine Terminal angeordnet ist, kontrolliert gestaltet werden. Durch die Perforation oder Prägung des Bereichs des Gehäuses kann insbesondere die Höhe des Drucks, der zur Ablösung des Bereichs des Gehäuses, auf dem der mindestens eine Terminal angeordnet ist, führen soll, eingestellt werden. Ein beispielhafter Druck, der zur Ablösung des Bereichs des Gehäuses, auf dem der mindestens eine Terminal angeordnet ist, führen soll, liegt bei 1 bar bis 10 bar, bevorzugt bei 3 bar bis 7 bar.

Gemäß einer nächsten vorzugsweisen Ausgestaltungsform der Offenbarung ist der Bereich des Gehäuses, auf dem der mindestens eine Terminal angeordnet ist, mit dem anderen Bereich des Gehäuses verklebt oder laminiert. Durch den Umstand, dass der Bereich des Gehäuses, auf dem der mindestens eine Terminal angeordnet ist, mit dem anderen Bereich des Gehäuses verklebt oder laminiert worden ist, kann die Druckeinwirkung, ab deren Überschreitung oder Erreichen der Bereich des Gehäuses, auf dem der mindestens eine Terminal angeordnet ist, abgelöst werden soll, vorgegeben werden.

Der Stromableiter ist mit einer Anode oder Kathode des Batteriesystems durch eine andere Sollbruchstelle verbunden. Der Umstand, dass der Stromableiter mit einer Anode oder Kathode des Batteriesystems durch eine andere Sollbruchstelle verbunden ist, führt zu einer Erhöhung der Wirksamkeit der

Erfindung, da eine zweite Einrichtung zur elektrischen Trennung bereit gestellt wird. Dadurch wird die Wahrscheinlichkeit des Eintretens von externen Kurzschlüssen oder Kriechströmen weiter verringert.

### Kurze Beschreibung der Figuren

Nachfolgend wird die Erfindung anhand von Ausführungsbeispielen, aus denen sich weitere erfinderische Merkmale ergeben können, auf die die Erfindung aber in ihrem Umfang nicht beschränkt ist, erläutert. Die Ausführungsbeispiele sind in den Figuren dargestellt. Es zeigt:
- Figur 1: das erfindungsgemäße Batteriesystem gemäß einer ersten Ausführungsform;
- Figur 2: das erfindungsgemäße Batteriesystem gemäß einer zweiten Ausführungsform;
- Figur 3: das erfindungsgemäße Batteriesystem gemäß einer dritten Ausführungsform;
- Figur 4: eine schematische Darstellung der Seitenansicht eines erfindungsgemäßen Batteriesystems gemäß einer vierten Ausführungsform;
- Figur 5: die schematische Darstellung der Seitenansicht eines erfindungsgemäßen Batteriesystems gemäß einer vierten Ausführungsform nach Entstehen einer Druckeinwirkung, die zur Ablösung eines Bereichs des Gehäuses des Batteriesystems geführt hat;
- Figur 6: eine schematische Darstellung der Seitenansicht eines erfindungsgemäßen Batteriesystems gemäß einer fünften Ausführungsform;
- Figur 7: eine schematische Darstellung der Seitenansicht eines erfindungsgemäßen Batteriesystems gemäß einer sechsten Ausführungsform;
- Figur 8: eine schematische Darstellung einer Verbindung eines Terminals mit einem Stromableiter über eine erfindungsgemäße andere Sollbruchstelle gemäß einer ersten Ausführungsform;
- Figur 9: eine schematische Darstellung einer Verbindung eines Terminals mit einem Stromableiter über eine erfindungsgemäße andere Sollbruchstelle gemäß einer zweiten Ausführungsform;
- Figur 10: eine schematische Darstellung einer Verbindung eines Terminals mit einem Stromableiter über eine erfindungsgemäße andere Sollbruchstelle gemäß einer dritten Ausführungsform.

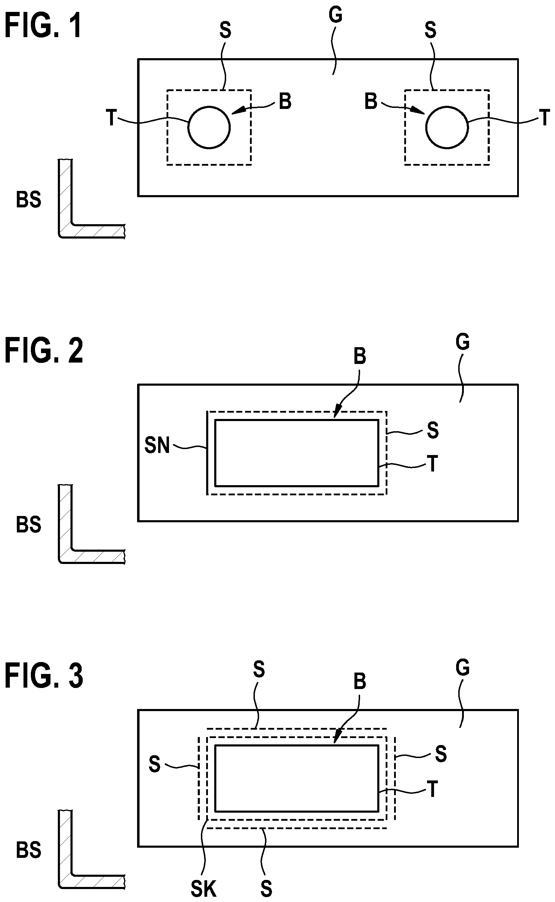

In Figur 1 ist ein erfindungsgemäßes Batteriesystem gemäß einer ersten Ausführungsform schematisch dargestellt. Das Batteriesystem wird mit BS bezeichnet. Mit B wird ein Bereich des Gehäuses G des Batteriesystems BS bezeichnet und mit T wird mindestens ein Terminal des Batteriesystems BS bezeichnet. Es kann sich um den Bereich B eines Gehäuses G einer Batteriezelle handeln, wobei die Batteriezelle Bestandteil des Batteriesystems BS ist. Der mindestens eine Terminal T ist zur elektrischen Kontaktierung des Batteriesystems BS mit einem anderen System geeignet. Der mindestens eine Terminal T ist auf dem Bereich B des Gehäuses G angeordnet. Mit S wird eine Sollbruchstelle bezeichnet. Die Sollbruchstelle S ist zum Ablösen des Bereichs B von einem anderen Bereich des Gehäuses G unter Druckeinwirkung geeignet. In Figur 1 ist der Zustand des Batteriesystems BS vor Einsetzen einer solchen Druckeinwirkung, die zum Ablösen des Bereichs B des Gehäuses G führt, dargestellt.

In Figur 2 ist ein erfindungsgemäßes Batteriesystem gemäß einer zweiten Ausführungsform schematisch dargestellt. Das Batteriesystem wird mit BS bezeichnet. Mit B wird ein Bereich des Gehäuses G des Batteriesystems BS bezeichnet und mit T wird mindestens ein Terminal des Batteriesystems BS bezeichnet. Es kann sich um den Bereich B eines Gehäuses G einer Batteriezelle handeln, wobei die Batteriezelle Bestandteil des Batteriesystems BS ist. Der mindestens eine Terminal T ist zur elektrischen Kontaktierung des Batteriesystems BS mit einem anderen System geeignet. Der mindestens eine Terminal T ist auf dem Bereich B des Gehäuses G angeordnet. Mit S wird eine Sollbruchstelle bezeichnet. Die Sollbruchstelle S ist zum Ablösen des Bereichs B von einem anderen Bereich des Gehäuses G unter Druckeinwirkung geeignet. Mit SN wird ein Scharnier bezeichnet. Das Scharnier SN ist als verbindendes Gelenk zwischen dem Bereich B und dem Gehäuse G ausgebildet. Für den Fall, dass es zum einem Aufbrechen der Sollbruchstelle S unter Druckeinwirkung kommt, wird der Bereich B um das Scharnier SN herum aufgebogen. In Figur 2 ist der Zustand des Batteriesystems BS vor Einsetzen einer solchen Druckeinwirkung, die zum Ablösen des Bereichs B des Gehäuses G führt, dargestellt.

In Figur 3 ist ein erfindungsgemäßes Batteriesystem gemäß einer dritten Ausführungsform schematisch dargestellt. Das Batteriesystem wird mit BS bezeichnet. Mit B wird ein Bereich des Gehäuses G des Batteriesystems BS bezeichnet und mit T wird mindestens ein Terminal des Batteriesystems BS bezeichnet. Es kann sich um den Bereich B eines Gehäuses G einer Batteriezelle handeln, wobei die Batteriezelle Bestandteil des Batteriesystems BS ist. Der mindestens eine Terminal T ist zur elektrischen Kontaktierung des Batteriesystems BS mit einem anderen System geeignet. Der mindestens eine Terminal T ist auf dem Bereich B des Gehäuses G angeordnet. Mit S und SK werden Sollbruchstellen bezeichnet. Die Sollbruchstellen S und SK sind zum Ablösen des Bereichs B von einem anderen Bereich des Gehäuses G unter Druckeinwirkung geeignet. Gemäß der in Figur 3 dargestellten Ausführungsform kann der Terminal T insbesondere in Form einer Folie auf dem Bereich B angeordnet worden sein. Gemäß der in Figur 3 dargestellten Ausführungsform weist das Gehäuse G mehrere Sollbruchstellen auf. Die mit SK bezeichnete Sollbruchstelle ist derart erzeugt worden, dass der Bereich B mit dem Gehäuse G verklebt worden ist, wobei die Klebezone als Sollbruchstelle SK wirkt. Als Klebezone wird der Bereich bezeichnet, an dem die Verklebung vorgenommen worden ist. Um die Sollbruchstelle SK sind die Sollbruchstellen S angeordnet. Die Sollbruchstellen S und die Sollbruchstelle SK sind derart auf dem Gehäuse G ausgeführt, dass das Gehäuse G an einem Verbindungsbereich, an dem es mit dem Bereich B verbunden ist, einen stabilen mechanischen Zustand aufweist. Vor einer möglichen Druckeinwirkung befindet sich der Verbindungsbereich, an dem das Gehäuse G mit dem Bereich B über die Sollbruchstellen S und SK verbunden ist, in dem stabilen mechanischen Zustand. Nach Erreichen eines bestimmten Druckwertes biegt sich der Verbindungsbereich nach außen und durchläuft einen metastabilen Zustand. Aus dem metastabilen Zustand heraus bewegt sich der Verbindungsbereich wieder in einen anderen stabilen Zustand, wobei in diesem anderen stabilen Zustand die Sollbruchstellen S aufgerissen sind. Das Aufreißen der Sollbruchstellen S führt dann zu einem Ablösen des Bereichs B von dem Gehäuse G.

In Figur 3 ist der Zustand des Batteriesystems BS vor Einsetzen einer solchen Druckeinwirkung, die zum Ablösen des Bereichs B des Gehäuses G führt, dargestellt.

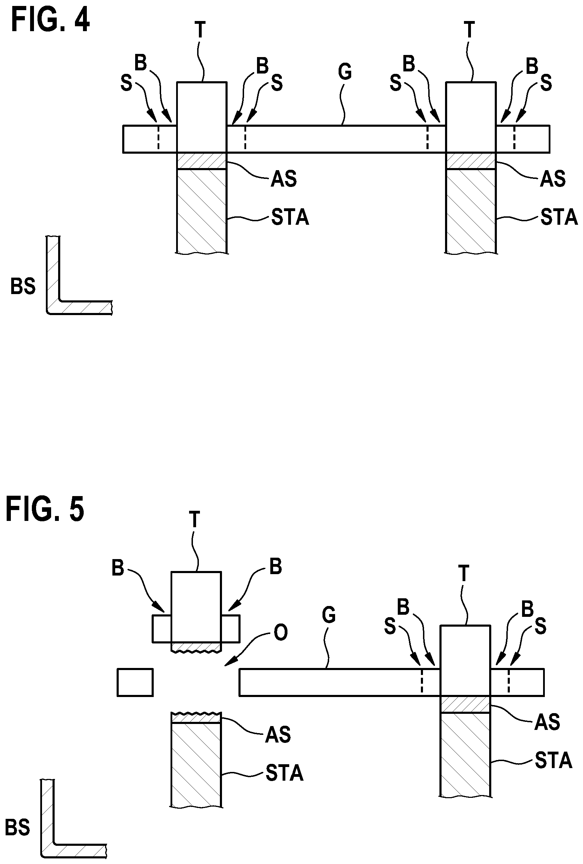

In Figur 4 ist ein erfindungsgemäßes Batteriesystem BS gemäß einer vierten Ausführungsform in einer Seitenansicht schematisch dargestellt. Mit S werden Sollbruchstellen bezeichnet. Die Sollbruchstellen S sind zum Ablösen des Bereichs B von einem anderen Bereich des Gehäuses G unter Druckeinwirkung geeignet. Mit STA werden Stromableiter bezeichnet, wobei die Stromableiter STA die Terminals T mit einer Kathode oder einer Anode des Batteriesystems BS elektrisch leitend verbinden. Mit AS wird eine andere Sollbruchstelle bezeichnet, wobei die andere Sollbruchstelle AS den mindestens einen Terminal T mit einem Stromableiter STA elektrisch leitend verbindet. Die andere Sollbruchstelle AS ist zum Aufbrechen unter Zugwirkung geeignet. Dadurch, dass es zu einem Ablösen des Bereichs B unter Druckeinwirkung kommt, entsteht eine Zugwirkung zwischen dem mindestens einen Terminal T und dem Stromableiter STA. Diese Zugwirkung führt zum Aufbrechen der anderen Sollbruchstelle AS.

In Figur 5 ist ein erfindungsgemäßes Batteriesystem BS gemäß einer vierten Ausführungsform in einer Seitenansicht schematisch dargestellt, nachdem durch Entstehen einer Druckeinwirkung der Bereich B des Gehäuses G, auf dem der mindestens eine Terminal angeordnet ist, von dem anderen Bereich des Gehäuses G abgelöst worden ist. Durch die Ablösung ist eine Öffnung O im Gehäuse G des Batteriesystems BS geschaffen worden. Durch die Öffnung O können Substanzen aus dem Batteriesystem BS austreten. Der Umstand, dass die Substanzen genau am Ort der Öffnung O austreten, verhindert die Schädigung des Batteriesystems BS an anderer Stelle. Insbesondere für den Fall, dass eine Mehrzahl von einzelnen Batteriezellen nebeneinander angeordnet ist, wird dadurch verhindert, dass es zu einer Schädigung einer Batteriezelle durch eine andere Batteriezelle kommt. Darüber hinaus ist auf diese Weise durch die Druckeinwirkung der mindestens eine Terminal T von dem Stromableiter STA elektrisch getrennt worden. Diese elektrische Trennung des mindestens einen Terminals T von dem Stromableiter STA ist einfacher und kostengünstiger zu realisieren als beispielsweise eine Trennung über eine Schmelzsicherung. Darüber hinaus wird die Wahrscheinlichkeit des Entstehens eines unerwünschten externen Kurzschlusses verhindert. Hintergrund ist somit auch die Vermeidung von unerwünschten Effekten, die im Gebrauch von Schmelzsicherungen entstehen können. Zu den unerwünschten Effekten im Gebrauch von Schmelzsicherungen zählen beispielsweise interne Kurzschlüsse im Batteriesystem BS sowie Kriechströme und Brände innerhalb des Batteriesystems BS.

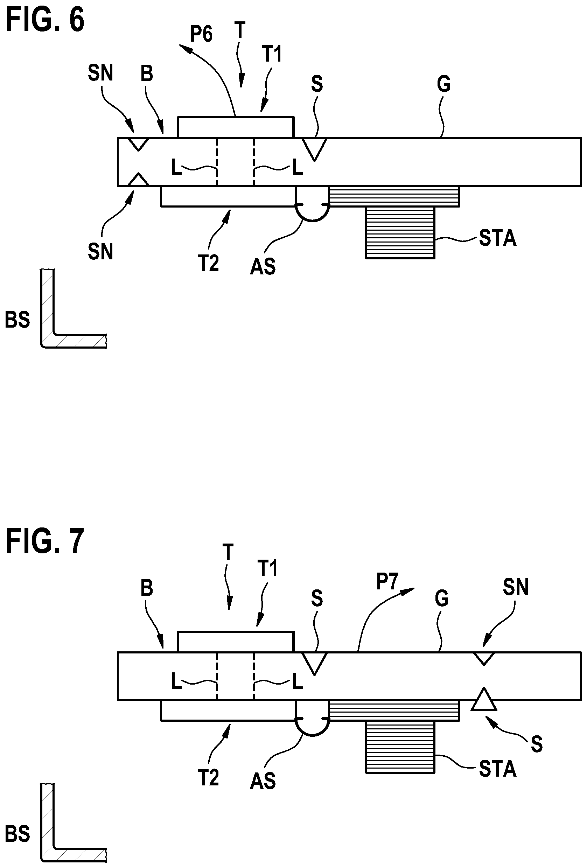

In Figur 6 ist ein erfindungsgemäßes Batteriesystem BS gemäß einer fünften Ausführungsform in einer Seitenansicht schematisch dargestellt. Mit S wird eine Sollbruchstelle bezeichnet. Die Sollbruchstelle S ist zum Ablösen des Bereichs B von einem anderen Bereich des Gehäuses G unter Druckeinwirkung geeignet. Mit STA wird ein Stromableiter bezeichnet, wobei der Stromableiter STA den Terminal T mit einer Kathode oder einer Anode des Batteriesystems BS elektrisch leitend verbindet. Der Stromableiter STA ist gegenüber dem Gehäuse G elektrisch isoliert. Gemäß der in Figur 6 dargestellten Ausführungsform ist das Gehäuse G zwischen einem ersten Bestandteil T1 des Terminals T und einem zweiten Bestandteil T2 des Terminals T angeordnet. Die beiden Bestandteile T1 und T2 des Terminals T sind, durch das Gehäuse G hindurch, mittels elektrischer Leitungen L verbunden. Die beiden Bestandteile T1 und T2 des Terminals T und die elektrischen Leitungen L sind gegenüber dem Gehäuse G elektrisch isoliert. Mit AS wird eine andere Sollbruchstelle bezeichnet, wobei die andere Sollbruchstelle AS den mindestens einen Terminal T mit einem Stromableiter STA elektrisch leitend verbindet. Die andere Sollbruchstelle AS ist zum Reißen unter Zugwirkung geeignet. Insbesondere kann es sich bei der anderen Sollbruchstelle AS um einen elektrisch leitenden Draht handeln.

Dadurch, dass es zu einem Ablösen des Bereichs B unter Druckeinwirkung kommt, entsteht eine Zugwirkung zwischen dem Bestandteil T2 des Terminals T und dem Stromableiter STA. Diese Zugwirkung führt zum Aufreißen der anderen Sollbruchstelle AS.

Mit SN wird mindestens ein Scharnier bezeichnet. Das mindestens eine Scharnier SN ist als verbindendes Gelenk zwischen dem Bereich B und dem Gehäuse G ausgebildet. Für den Fall, dass es zum einem Aufbrechen der Sollbruchstelle S unter Druckeinwirkung kommt, wird der Bereich B um das Scharnier SN herum aufgebogen. Der Bereich B wird gemäß dieser Ausführungsform um das Scharnier SN herum in Rotationsrichtung P6 gebogen.

In Figur 7 ist ein erfindungsgemäßes Batteriesystem BS gemäß einer sechsten Ausführungsform in einer Seitenansicht schematisch dargestellt. Mit S werden Sollbruchstellen bezeichnet. Die Sollbruchstellen S sind zum Ablösen des Bereichs B von einem anderen Bereich des Gehäuses G unter Druckeinwirkung geeignet. Mit STA wird ein Stromableiter bezeichnet, wobei der Stromableiter STA den Terminal T mit einer Kathode oder einer Anode des Batteriesystems BS elektrisch leitend verbindet. Gemäß der in Figur 6 dargestellten Ausführungsform ist das Gehäuse G zwischen einem ersten Bestandteil T1 des Terminals T und einem zweiten Bestandteil T2 des Terminals T angeordnet. Die beiden Bestandteile T1 und T2 des Terminals T sind durch das Gehäuse G hindurch mittels elektrischer Leitungen L verbunden. Die beiden Bestandteile T1 und T2 des Terminals T und die elektrischen Leitungen L sind gegenüber dem Gehäuse G elektrisch isoliert.

Mit AS wird eine andere Sollbruchstelle bezeichnet, wobei die andere Sollbruchstelle AS den mindestens einen Terminal T mit einem Stromableiter STA elektrisch leitend verbindet. Der Stromableiter STA ist gegenüber dem Gehäuse G elektrisch isoliert. Der Stromableiter STA ist beispielsweise dehnbar oder reißbar oder brechbar ausgestaltet, so dass er unter Zugeinwirkung oder Druckeinwirkung sich dehnt oder auseinanderreißt. Der Stromableiter STA kann auch als gefaltete elektrisch leitende Folie ausgelegt sein, die sich unter Zugwirkung entfaltet. Die andere Sollbruchstelle AS ist zum Reißen unter Zugwirkung geeignet. Insbesondere kann es sich bei der anderen Sollbruchstelle AS um einen elektrisch leitenden Draht handeln.

Dadurch, dass es zu einem Ablösen des Bereichs B unter Druckeinwirkung kommt, entsteht eine Zugwirkung zwischen dem Bestandteil T2 des Terminals T und dem Stromableiter STA. Diese Zugwirkung führt zum Aufreißen der anderen Sollbruchstelle AS.

Mit SN wird ein Scharnier bezeichnet. Das Scharnier SN ist als verbindendes Gelenk zwischen dem Bereich B und dem Gehäuse G ausgebildet. Für den Fall, dass es zum einem Aufbrechen der Sollbruchstelle S unter Druckeinwirkung kommt, wird das Gehäuse G um das Scharnier SN herum in Rotationsrichtung P7 aufgebogen. Der Bereich B verbleibt gemäß dieser Ausführungsform in seiner ursprünglichen Position.

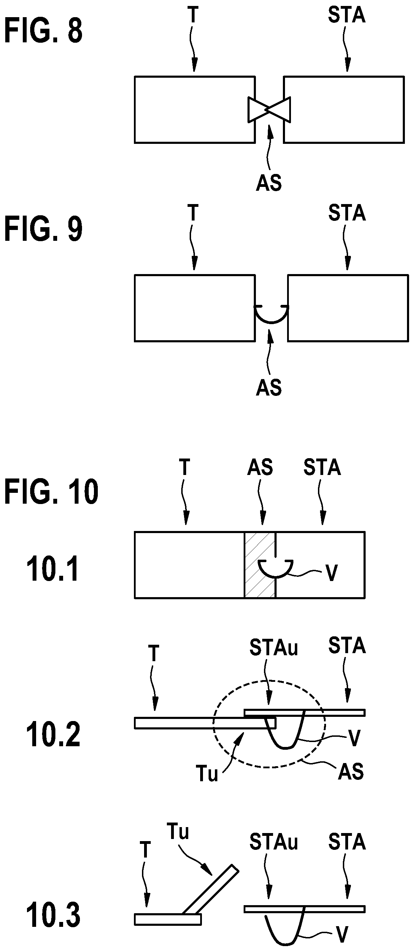

In Figur 8 ist eine Verbindung eines Terminals T mit einem Stromableiter STA über eine erfindungsgemäße andere Sollbruchstelle AS gemäß einer ersten Ausführungsform schematisch dargestellt. Die andere Sollbruchstelle AS verbindet den mindestens einen Terminal T mit einem Stromableiter STA elektrisch leitend. Die andere Sollbruchstelle AS ist zum Aufbrechen unter Bruchwirkung oder Reißwirkung geeignet. Dadurch, dass es zu einem Ablösen eines Bereichs B, auf dem der mindestens eine Terminal T angeordnet ist, unter Druckeinwirkung kommt, entsteht eine Zugwirkung oder Scherkraftwirkung zwischen dem mindestens einen Terminal T und dem Stromableiter STA. Diese Zugwirkung oder Scherkraftwirkung führt zum Aufbrechen der anderen Sollbruchstelle AS. Die in Figur 8 dargestellte Ausführungsform der Sollbruchstelle AS kann in sämtlichen, in den Figuren 1 bis 7 schematisch dargestellten, Ausführungsformen des erfindungsgemäßen Batteriesystems angewendet werden.

In Figur 9 ist eine Verbindung eines Terminals T mit einem Stromableiter STA über eine erfindungsgemäße andere Sollbruchstelle AS gemäß einer zweiten Ausführungsform schematisch dargestellt. Im Unterschied zu der in Figur 8 dargestellten Ausführungsform, ist die andere Sollbruchstelle als elektrisch leitender Draht ausgeführt. Die andere Sollbruchstelle AS ist zum Reißen geeignet. Dadurch, dass es zu einem Ablösen eines Bereichs B, auf dem der mindestens eine Terminal T angeordnet ist, unter Druckeinwirkung kommt, entsteht eine Zugwirkung oder Scherkraftwirkung zwischen dem mindestens einen Terminal T und dem Stromableiter STA. Diese Zugwirkung oder Scherkraftwirkung führt zum Reißen der anderen Sollbruchstelle AS. Die in Figur 9 dargestellte Ausführungsform der Sollbruchstelle AS kann in sämtlichen, in den Figuren 1 bis 7 schematisch dargestellten, Ausführungsformen des erfindungsgemäßen Batteriesystems angewendet werden.

In Figur 10 ist eine Verbindung eines Terminals T mit einem Stromableiter STA über eine erfindungsgemäße andere Sollbruchstelle AS gemäß einer dritten Ausführungsform schematisch dargestellt.

In Teilfigur 10.1 ist eine Aufsicht auf die andere Sollbruchstelle AS gemäß der dritten Ausführungsform schematisch dargestellt. Die andere Sollbruchstelle AS verbindet den mindestens einen Terminal T mit einem Stromableiter STA elektrisch leitend. Die andere Sollbruchstelle wird gemäß dieser Ausführungsform durch eine Überlappung eines Teils des Terminals T mit einem Teil des Stromableiters STA gebildet. Der überlappende Bereich ist schraffiert dargestellt. In diesem überlappenden Bereich können der Stromableiter STA und der Terminal T zusammenklebt oder zusammenlaminiert worden sein. Der Stromableiter STA und der Terminal T sind über eine elektrische leitfähige Verbindung V miteinander verbunden.

Die andere Sollbruchstelle AS ist zum Aufbrechen unter Bruchwirkung oder Reißwirkung geeignet. Dadurch, dass es zu einem Ablösen eines Bereichs B, auf dem der mindestens eine Terminal T angeordnet ist, unter Druckeinwirkung kommt, entsteht eine Zugwirkung oder Scherkraftwirkung zwischen dem mindestens einen Terminal T und dem Stromableiter STA. Diese Zugwirkung oder Scherkraftwirkung führt zum Aufbrechen der anderen Sollbruchstelle AS.

In Teilfigur 10.2 eine Seitenansicht der anderen Sollbruchstelle AS schematisch dargestellt. Die sich überlappenden Bereiche des Terminals T und des Stromableiters STA werden mit Tu beziehungsweise mit STAu bezeichnet. In Teilfigur 10.2 ist der Zustand der anderen Sollbruchstelle AS vor einer Druckeinwirkung dargestellt.

In Teilfigur 10.3 eine Seitenansicht der anderen Sollbruchstelle AS nach einer Druckeinwirkung schematisch dargestellt. Der Bereich Tu ist dabei unter Druckeinwirkung verformt und von dem Bereich STAu weggebogen worden. Durch das Wegbiegen ist die andere Sollbruchstelle AS aufgebrochen worden und der elektrische Kontakt zwischen dem Terminal T und dem Stromableiter STA unterbrochen worden.

Die in Figur 10 dargestellte Ausführungsform der Sollbruchstelle AS kann in sämtlichen, in den Figuren 1 bis 7 schematisch dargestellten, Ausführungsformen des erfindungsgemäßen Batteriesystems angewendet werden.

## Patentansprüche

1. Batteriesystem (BS), insbesondere Lithium-Ionen-Batteriesystem, umfassend mindestens einen Terminal (T), geeignet zur elektrischen Kontaktierung des Batteriesystems (BS) mit einem anderen System, wobei der mindestens eine Terminal (T) auf einem Bereich (B) eines Gehäuses (G) des Batteriesystems (BS) angeordnet ist, wobei der Bereich (B) des Gehäuses (G), auf dem der mindestens eine Terminal (T) angeordnet ist, zum Ablösen von einem anderen Bereich des Gehäuses (G) unter Druckeinwirkung geeignet ist,
wobei der mindestens eine Terminal (T) zur elektrischen Kontaktierung mit einem Stromableiter (STA) geeignet ist, wobei zwischen dem mindestens einen Terminal (T) und dem Stromableiter (STA) kein elektrischer Kontakt besteht, wenn der Bereich (B) des Gehäuses (G), auf dem der mindestens eine Terminal (T) angeordnet ist, abgelöst ist, wobei der Stromableiter (STA) mit einer Anode oder einer Kathode des Batteriesystems (BS) durch eine andere Sollbruchstelle (AS) verbunden ist, **dadurch gekennzeichnet, dass** das Batteriesystem ferner den Stromableiter (STA) umfasst, wobei der Stromableiter im Inneren des Gehäuses (G) angeordnet ist.

2. Batteriesystem (BS) nach Anspruch 1, **dadurch gekennzeichnet, dass** der Bereich (B) des Gehäuses (G), auf dem der mindestens eine Terminal (T) angeordnet ist, mit dem anderen Bereich des Gehäuses (G) durch eine Sollbruchstelle (S, SK) und insbesondere durch einen perforierten oder geprägten Bereich des Gehäuses (G) verbunden ist.

3. Batteriesystem (BS) nach einem der vorhergehenden Ansprüche, **dadurch gekennzeichnet, dass** der Bereich (B) des Gehäuses (G), auf dem der mindestens eine Terminal (T) angeordnet ist, mit dem anderen Bereich des Gehäuses (G) verklebt oder laminiert worden ist.

4. Batteriesystem (BS) nach einem der vorhergehenden Ansprüche, **dadurch gekennzeichnet, dass** der mindestens eine Terminal (T) mit einer Anode oder einer Kathode des Batteriesystems (BS) durch eine andere Sollbruchstelle (AS) verbunden ist.

5. Verwendung eines Batteriesystems (BS) nach einem der Ansprüche 1 bis 4 in einem Fahrzeug, insbesondere in einem Kraftfahrzeug.

## Claims

1. Battery system (BS), in particular lithium ion battery system, comprising at least one terminal (T) suitable for making electrical contact between the battery system (BS) and another system, wherein the at least one terminal (T) is arranged on a region (B) of a housing (G) of the battery system (BS), wherein that region (B) of the housing (G) on which the at least one terminal (T) is arranged is suitable for being detached from another region of the housing (G) under the effect of pressure,
wherein the at least one terminal (T) is suitable for making electrical contact with a current collector (STA), wherein there is no electrical contact between the at least one terminal (T) and the current collector (STA) if that region (B) of the housing (G) on which the at least one terminal (T) is arranged has been detached, wherein the current collector (STA) is connected to an anode or a cathode of the battery system (BS) by means of another predetermined breaking point (AS), **characterized in that** the battery system also comprises the current collector (STA), wherein the current collector is arranged inside the housing (G).

2. Battery system (BS) according to Claim 1, **characterized in that** that region (B) of the housing (G) on which the at least one terminal (T) is arranged is connected to another region of the housing (G) by means of a predetermined breaking point (S, SK) and, in particular, by means of a perforated or stamped region of the housing (G).

3. Battery system (BS) according to one of the preceding claims, **characterized in that** that region (B) of the housing (G) on which the at least one terminal (T) is arranged has been adhesively bonded or laminated to another region of the housing (G).

4. Battery system (BS) according to one of the preceding claims, **characterized in that** the at least one terminal (T) is connected to an anode or a cathode of the battery system (BS) by means of another predetermined breaking point (AS).

5. Use of a battery system (BS) according to one of Claims 1 to 4 in a vehicle, in particular in a motor vehicle.

## Revendications

1. Système de batterie (BS), notamment système de batterie aux ions de lithium, comprenant au moins une borne (T), adaptée pour la mise en contact électrique du système de batterie (BS) avec un autre système, l'au moins une borne (T) étant disposée sur une zone (B) d'un boîtier (G) du système de batterie (BS), la zone (B) du boîtier (G) sur laquelle est disposée l'au moins une borne (T) étant conçue pour se détacher d'une autre zone du boîtier (G) sous l'effet de la pression,
l'au moins une borne (T) étant adaptée pour la mise en contact électrique avec un élément de dérivation de courant (STA), aucun contact électrique n'étant présent entre l'au moins une borne (T) et l'élément de dérivation de courant (STA) lorsque la zone (B) du boîtier (G) sur laquelle est disposée l'au moins une borne (T) est détachée, l'élément de dérivation de courant (STA) étant relié à une anode ou une cathode du système de batterie (BS) par un autre point destiné à la rupture (AS), **caractérisé en ce que** le système de batterie comporte en plus l'élément de dérivation de courant (STA), l'élément de dérivation de courant étant disposé à l'intérieur du boîtier (G).

2. Système de batterie (BS) selon la revendication 1, **caractérisé en ce que** la zone (B) du boîtier (G) sur laquelle est disposée l'au moins une borne (T) est reliée avec l'autre zone du boîtier (G) par un point destiné à la rupture (S, SK) et notamment par une zone perforée ou estampée du boîtier (G).

3. Système de batterie (BS) selon l'une des revendications précédentes, **caractérisé en ce que** la zone (B) du boîtier (G) sur laquelle est disposée l'au moins une borne (T) a été collée ou stratifiée avec l'autre zone du boîtier (G).

4. Système de batterie (BS) selon l'une des revendications précédentes, **caractérisé en ce que** l'au moins une borne (T) est reliée à une anode ou une cathode du système de batterie (BS) par un autre point destiné à la rupture (AS).

5. Utilisation du système de batterie (BS) selon l'une des revendications 1 à 4 dans un véhicule, notamment dans un véhicule automobile.
